# EUROPEAN PATENT SPECIFICATION

(11) **EP 2 268 709 B1**
(45) Date of publication and mention of the grant of the patent: **02.10.2013**
(21) Application number: 08873425.6
(22) Date of filing: 31.12.2008
(51) Int. Cl.: C08G 69/00, C08L 69/00

(54) **SCRATCH RESISTANT THERMOPLASTIC RESIN COMPOSITION**
KRATZFESTE THERMOPLASTISCHE HARZZUSAMMENSETZUNG
COMPOSITION DE RÉSINE THERMOPLASTIQUE RÉSISTANTE AU RAYAGE

(30) Priority: 21.03.2008 KR 20080026561
(43) Date of publication of application: 05.01.2011
(73) Proprietor: CHEIL INDUSTRIES INC., Gumi-si Gyeongsangbuk-do 730-710 (KR)
(72) Inventor: KWON, Kee Hae, Gunpo-si Gyeonggi-do 435-050 (KR); KIM, Il Jin, Ansan-si Gyeonggi-do 426-220 (KR)
(74) Representative: Bublak, Wolfgang
(86) International application number: PCT/KR2008/007820
(87) International publication number: WO 2009/116722

(56) References cited:
- WO-A-2007/119920
- WO-A-2009/113762
- KR-B1- 100 767 428
- US-A- 5 280 070
- US-A- 5 292 809
- US-A1- 2006 030 647

## Description

### [Technical Field]

The present invention relates to a thermoplastic resin composition with compatibility. More particularly, the present invention relates to a flame retardant thermoplastic resin composition with compatibility by introducing a branched acrylic copolymer resin and flame retardant to a polycarbonate resin.

### [Background Art]

Generally, thermoplastic resins have lower specific gravity than glasses and metals, and have good physical properties such as moldability and impact resistance. However, poor surface scratch resistance is a drawback.

In particular, polycarbonate resins have excellent mechanical strength, flame retardancy, transparency, and weatherability, in addition to good impact resistance, thermal stability, self-extinguishing property, and dimensional stability so that they have been widely used in electrical and electronic products and parts of automobiles. Further, although the polycarbonate resins as engineering plastics can be a substitute for conventional glasses which need transparency and impact resistance at the same time, there is also a drawback of poor scratch resistance.

On the other hand, although a polymethylmethacrylate resin has good transparency, weatherability, mechanical strength, surface gloss, adhesive strength, and excellent scratch resistance, it has a disadvantage in that it is hard to obtain impact resistance and flame retardancy.

In order to improve the scratch resistance of plastic products, a hard coating method, which includes the steps of coating a surface of an injection-molded resin with an organic-inorganic hybrid material and curing the organic-inorganic hybrid material on the surface of the resin using heat or ultra violet light, has been conventionally used. However, because the hard coating method requires an additional coating step, the processing time and the manufacturing cost increase and it may cause environmental problems. Recently, with recent increased interest in environmental protection and reduction of manufacturing costs, there is a need for a non-coated resin which has scratch resistance without using the hard coating method. Also, it is important to develop a resin with good scratch resistance for a housing manufacturing industry.

One attempt to improve scratch resistance of the thermoplastic resin is to alloy acrylic resin such as polymethylmethacrylate with good scratch resistance with polycarbonate resin. However, the method has a drawback in that it is difficult to obtain high transparency and colorability due to the difference between the refractive indices of the polycarbonate resin and the acrylic resin.

Korean Patent Publication Laid-open No. 2004-0079118 discloses a method of lowering the molecular weight of polycarbonate during a kneading process using metal stearic acid ester in order to improve the compatibility between a polycarbonate resin and a methacrylate resin. However, the method has a disadvantage in that a blend of the polycarbonate and the methacrylate resin has significantly low mechanical properties.

Although U.S. Patent No. 4,287,315 discloses a methacrylate resin with good impact strength by using an ethylene-vinylacetate rubber, the blend of the polycarbonate and the methacrylate resin has low transparency.

Patent document WO 2007/119920 A1 discloses a flame retardant thermoplastic resin composition with scratch resistance comprising a polycarbonate resin, a polymethylmethacrylate resin, a polyethylene terephthalate-based resin, a phosphorus-based flame-retarding agent and an impact modifier.

Accordingly, the present inventors have developed a thermoplastic resin composition having flame retardancy and scratch resistance as well as high transparency and high colorability by adding a branched (meth)acrylic copolymer resin with a high refractive index and flame retardant to a blend of polycarbonate resin and (meth)acrylic resin in order to improve the compatibility of those two resins and to reduce the difference of refractive index between the refractive indices of the polycarbonate resin and the (meth)acrylic resin.

### [Disclosure]

### [Technical Problem]

An object of the present invention is to provide a thermoplastic resin composition with compatibility and good flame retardancy and scratch resistance.

Another aspect of the present invention provides a flame retardant thermoplastic resin composition with good scratch resistance, while minimizing deterioration of transparency and colorability.

Another aspect of the present invention provides a flame retardant thermoplastic resin composition applicable for various parts of electrical and electronic appliances, parts of automobiles, lenses, window glasses, and the like, due to its good scratch resistance, high colorability, and high transparency.

Another aspect of the present invention provides a molded article produced from the flame retardant thermoplastic resin composition.

Other aspects, features and advantages of the present invention will be apparent from the ensuing disclosure and appended claims.

### [Technical Solution]

The flame retardant thermoplastic resin composition of the present invention comprises (A) 20 or more but less than 100 % by weight of a polycarbonate resin; (B) more than 0 but not more than 80 % by weight of a branched (meth)acrylic copolymer resin; and (C) 1 to 50 parts by weight of a flame retardant, per 100 parts by weight of a base resin comprising (A)+(B).

In an exemplary embodiment, the thermoplastic resin composition may comprise (A) 40 to 90 % by weight of a polycarbonate resin; (B) 10 to 60 % by weight of a branched (meth)acrylic copolymer resin and (C) 10 to 30 parts by weight of a flame retardant, per 100 parts by weight of a base resin comprising (A) and (B).

In an exemplary embodiment, the branched (meth)acrylic copolymer resin (B) may have a weight average molecular weight of 100,000 to 3,500,000. In another exemplary embodiment, the methacrylic copolymer resin (B) may have a weight average molecular weight of 500,000 to 3,000,000. In another exemplary embodiment, the methacrylic copolymer resin (B) may have a weight average molecular weight of 1,000,000 to 2,500,000.

Further, the branched (meth)acrylic copolymer resin (B) may have a refractive index of 1.495 to 1.575. In an exemplary embodiment, the refractive index may be 1.50 to 1.575, or 1.51 to 1.575.

The branched (meth)acrylic copolymer resin (B) may be a copolymer of (b1) an aromatic or aliphatic methacrylate, and (b3) a branch-inducing monomer, or a mixture of copolymers thereof. In an exemplary embodiment, the branched (meth)acrylic copolymer resin (B) may further comprise a mono-functional unsaturated monomer.

In an exemplary embodiment, the branched (meth)acrylic copolymer resin (B) may be a copolymer of 5 to 99.999 % by weight of the aromatic or aliphatic methacrylate (b1), 0 to 85 % by weight of the mono-functional unsaturated monomer (b2), and 0.001 to 10 % by weight of the branch-inducing monomer, or a mixture of copolymers thereof.

The flame retardant (C) may be a phosphorus-containing flame retardant, a halogen-containing flame retardant, or a mixtures thereof. In some exemplary embodiments, the flame retardant may be a phosphorus-containing flame retardant including a phosphate, a phosphonate, a phosphinate, a phosphine oxide, a phosphazene and a metal salt thereof; halogen-containing flame retardant including decabromo diphenylether, decabromo diphenylethane, tetrabromo bisphenol A, tetrabromo bisphenol A-epoxy oligomer, octabromo trimethylphenyl phosphate, ethylene bistetrabromophthalimide, tris (tribromophenol)triazine, brominated polystyrene; or a mixture thereof.

In another exemplary embodiment, the thermoplastic resin composition may further comprise (D) more than 0 but less than about 80 % by weight of a (meth)acrylic resin. In an embodiment, the thermoplastic resin composition may further comprise 10 to 30 % by weight of a (meth)acrylic resin (D). In another embodiment, the thermoplastic resin composition may further comprise 30 to 60 % by weight of a (meth)acrylic resin (D). The (meth)acrylic resin (D) may have a linear structure.

In an exemplary embodiment, the (meth)acrylic resin (D) is a polymer, a copolymer of one type or more of (meth)acrylic monomers, or a mixture thereof.

The flame retardant thermoplastic resin composition of the present invention further comprises additives selected from the group consisting of flame retardant aids, antimicrobials, releasing agents, thermal stabilizers, antioxidants, light stabilizers, compatibilizer, dyes, inorganic fillers, surfactants, nucleating agents, coupling agents, fillers, plasticizers, impact modifiers, coloring agents, stabilizers, lubricants, antistatic agents, pigments, flameproof agents, and a mixture thereof.

In an exemplary embodiment, the flame retardant thermoplastic resin composition may have a complex viscosity (η*) of 1,000 Pas to 10,000 Pas at 240 °C and 0.1 rad/s. In another exemplary embodiment, the thermoplastic resin composition may have a complex viscosity (η*) of 1,000 Pas to 5,000 Pas at 240 °C and 0.1 rad/s. In another embodiment, the complex viscosity may be 5,500 Pas to 10,000 Pas. Furthermore, at 240 °C, the ratio of η*(0.1 rad/s) / η*(100 rad/s) ranges from 3.0 to 100.0. In an exemplary embodiment, the ratio of η*(0.1 rad/s) / η*(100 rad/s) ranges from 3.5 to 30.0. In another exemplary embodiment, the ratio of η*(0.1 rad/s) / η*(100 rad/s) ranges from 30.0 to 75.0. In another exemplary embodiment, the ratio of η*(0.1 rad/s) / n*(100 rad/s) ranges from 75.0 to 100.0.

The present invention provides a molded article produced from the foregoing flame retardant thermoplastic resin composition. The present invention now will be described more fully hereinafter in the following detailed description of the invention.

### [Description of Drawings]

FIG. 1(a) is a scratch profile of a specimen prepared in Example 2 and (b) is a scratch profile of a specimen prepared in Comparative Example 3.
FIG. 2(a) is a transmission electron microscope (TEM) image of a specimen prepared in Example 2 and (b) is a transmission electron microscope (TEM) image of a specimen prepared in Comparative Example 1.
FIG. 3 is a graph comparing viscosity behavior of a specimen prepared in Example 2 with viscosity behavior of a specimen prepared in Comparative Example 1.

### [Best Mode]

### (A) Polycarbonate Resin

The polycarbonate resin of the present invention may be prepared by any conventional method well known to those skilled in the art, that is, the polycarbonate resin may be prepared by reacting dihydric phenol compound with phosgene in the presence of a catalyst and a molecular weight controlling agent. Also, the polycarbonate resin may be prepared by transesterification of a carbonate precursor such as dihydric phenol compound and diphenylcarbonate.

The dihydric phenol compound may be a bisphenol compound, preferably 2,2-bis(4-hydroxyphenyl)propane (bisphenol A). The bisphenol A may be partially or totally substituted with another dihydric phenol partially or in total. In addition to bisphenol A, examples of dihydric phenols may include hydroquinone, 4,4'-dihydroxydiphenyl, bis(4-hydroxyphenyl)methane, 1,1-bis(4-hydroxyphenyl)cyclohexane, 2,2-bis(3,5-dimethyl-4-hydroxyphenyl)propane, bis(4-hydroxyphenyl)sulfide, bis(4-hydroxyphenyl)sulfone, bis(4-hydroxyphenyl)sulfoxide, and bis(4-hydroxyphenyl)ketone, bis(4-hydroxyphenyl)ether, and also include halogenated bisphenol such as 2,2-bis(3,5-dibromo-4-hyroxyphenyl)propane.

However, the dihydric phenol compound applicable for preparing the polycarbonate resin is not limited to the aforementioned compounds.

Furthermore, the polycarbonate resin used in the present invention may be a homopolymer or a copolymer of two or more types of dihydric phenols, or a mixture thereof.

Examples of polycarbonate resin in the present invention may also include, linear polycarbonate resin, branched polycarbonate resin, and polyester carbonate copolymer resin.

The linear polycarbonate resin may be a bisphenol A-based polycarbonate resin. The branched polycarbonate resin may be prepared by reacting poly-functional aromatic compounds such as trimelitic anhydride, and trimelitic acid, with dihydric phenol compounds and carbonate precursors. The polyester carbonate copolymer resin may also be prepared by reacting di-functional carboxylic acid with dihydric phenol compounds and carbonate precursors. The linear polycarbonate resin, the branched polycarbonate resin and the polyester carbonate copolymer resin can be used alone or in combination with one another.

In an exemplary embodiment, the polycarbonate resin has a weight average molecular weight of 10,000 to 200,000 g/mol, preferably 15,000 to 80,000 g/mol, or 20,000 to 50,000 g/mol.

According to the present invention, the polycarbonate resin may be used in an amount of 20 or more but less than 100 % by weight, preferably 40 to 90 % by weight. If the amount is less than 20 % by weight, it is difficult to obtain good mechanical properties in the polycarbonate resin. In order to obtain scratch resistance, it is preferable that the amount is 45 to 80 % by weight. In an exemplary embodiment, the polycarbonate resin may be used in an amount of about 55 to about 85 % by weight. In another exemplary embodiment, the polycarbonate resin may be used in an amount of 75 to 90 % by weight. In another exemplary embodiment, the polycarbonate resin may be used in an amount of 50 to 70 % by weight.

### (B) Branched (meth)acrylic copolymer resin

The branched (meth)acrylic copolymer resin of the present invention may be a copolymer of (b1) an aromatic or aliphatic methacrylate and (b3) a branch-inducing monomer, or mixtures of copolymers thereof. The branched (meth)acrylic copolymer resin may have a branched structure with partially crosslinking. In an exemplary embodiment, the branched (meth)acrylic copolymer resin may further comprise (b2) a mono-functional unsaturated monomer.

In an exemplary embodiment, the branched (meth)acrylic copolymer resin of the present invention may be prepared by polymerizing a monomer mixture comprising (b1) 5 to 99.999 % by weight of an aromatic or aliphatic methacrylate, (b2) 0 to 85 % by weight of a mono-functional unsaturated monomer, and (b3) 0.001 to 10 % by weight of a branch-inducing monomer.

The aromatic or aliphatic methacrylate (b1) may have a hydrocarbon group having 6 to 20 carbon atoms, and may be represented by the following Formula 1 or Formula 2. 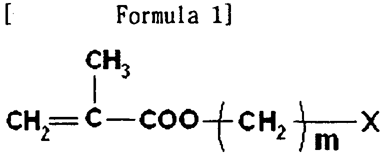 (wherein m is an integer from 0 to 10, and X is selected from the group consisting of a cyclohexyl group, a phenyl group, a methylphenyl group, a methylethylphenyl group, a propylphenyl group, a methoxyphenyl group, a cyclohexylphenyl group, a chlorophenyl group, a bromophenyl group, a phenylphenyl group, and a benzylphenyl group.) 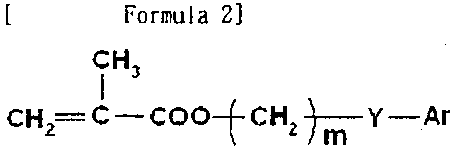 (wherein m is an integer from 0 to 10, Y is oxygen (0) or sulfur (S), and Ar is selected from the group consisting of a cyclohexyl group, a phenyl group, a methylphenyl group, a methylethylphenyl group, a methoxyphenyl group, a cyclohexylphenyl group, a chlorophenyl group, a bromophenyl group, a phenylphenyl group, and a benzylphenyl group.)

Examples of the aromatic or aliphatic methacrylate (b1) may include cyclohexyl methacrylate, phenoxy methacrylate, phenoxyethyl methacrylate, 2-ethylthiophenyl methacrylate, phenyl methacrylate, benzyl methacrylate, 2-phenylethyl methacrylate, 3-phenylpropyl methacrylate, 4-phenylbutyl methacrylate, 2-(2-methylphenyl)ethyl methacrylate, 2-(3-methylphenyl)ethyl methacrylate, 2-(4-methylphenyl)ethyl methacrylate, 2-(4-propylphenyl)ethyl methacrylate, 2-(4-(1-methylethyl)phenyl)ethyl methacrylate, 2-(4-methoxyphenyl)ethylmethacrylate, 2-(4-cyclohexylphenyl)ethyl methacrylate, 2-(2-chlorophenyl)ethyl methacrylate, 2-(3-chlorophenyl)ethyl methacrylate, 2-(4-chlorophenyl)ethyl methacrylate, 2-(4-bromophenyl)ethyl methacrylate, 2-(3-phenylphenyl)ethyl methacrylate, and 2-(4-benzylphenyl)ethyl methacrylate. They may he used alone or in combination with one another.

The aromatic or aliphatic methacrylate (b1) may be used in an amount of 5 to 99.999 % by weight, preferably 20 to 99 % by weight , more preferably 45 to 90 % by weight, based on the total weight of the monomer mixture. If the amount of the aromatic or aliphatic methacrylate (b1) is less than 5 % by weight, the average refractive index of polymerized (meth)acrylic copolymer may be lowered to less than 1.495.

The mono-functional unsaturated monomer (b2) may include methacrylic acid ester monomers including methyl methacrylate, ethyl methacrylate, n-propyl methacrylate, n-butyl methacrylate, hexyl methacrylate, 2-ethylhexyl methacrylate; acrylic acid ester monomers including methyl acrylate, ethyl acrylate, propyl acrylate, butyl acrylate, hexyl acrylate, 2-ethyl hexyl acrylate; unsaturated carboxylic acid monomers including acrylic acid and methacrylic acid; acid anhydride monomers including maleic anhydride; hydroxyl group containing ester monomers including 2-hydroxyethyl acrylate, 2-hydroxypropyl acrylate, and monoglycerol acrylate; and a mixture thereof.

The branched (meth)acrylic copolymer resin may optionally comprise the mono-functional unsaturated monomer (b2). The mono-functional unsaturated monomer (b2) may be used in an amount of 85 % by weight or less, preferably 1 to 70 % by weight, more preferably 10 to 60 % by weight based on the total monomer mixture.

Examples of the branch-inducing monomer (b3) may include silicone-containing branch-inducing monomer having a vinyl functional group, ester-containing branch-inducing monomer, and aromatic branch-inducing monomer. These monomers may be used alone or in combination with one another. The number of the functional groups of the branch-inducing monomer may be from 1 to 4. A branched copolymer having ultra-high molecular weight with partialy crosslinking may be prepared by using the branch-inducing monomers having such functional groups.

Examples of the branch-inducing monomer (b3) may include silane or siloxane compounds, aromatic crosslinking monomers, vinyl group-containing monomers, allyl compounds, and polyalkylene glycol di(meth)acrylate compounds.

Specific examples of the branch-inducing monomer (b3) may include silane or siloxane compounds including unsaturated hydrocarbon group-containing silicone-containing crosslinking monomers such as divinyl tetramethyl disiloxane, and tetramethyl tetravinyl cyclotetrasiloxane; aromatic crosslinking monomers including divinylbenzene; vinyl group-containing monomers including 1,4-divinyloxybutane and divinylsulfone; allyl compounds including diallyl phthalate, diallylacrylamide, triallyl (iso)cyanurate, and triallyl trimelitate; and (poly)alkylene glycol di(meth)acrylate compounds including 1,6-hexanediol di(meth)acrylate, (poly)ethylene glycol di(meth)acrylate, (poly)propylene glycol di(meth)acrylate, (poly)tetramethylene glycol di(meth)acrylate, pentaerythritol tetra(meth)acrylate, pentaerythritol tri(meth)acrylate, pentaerythritol di(meth)acrylate, trimethylolpropane tri(meth)acrylate, dipentaerythritol hexa(meth)acrylate, dipentaerythritol penta(meth)acrylate, and glycerol tri(meth)acrylate. They may be used alone or in combination with one another.

The branch-inducing monomer (b3) may be used in an amount of 0.001 to 10 % by weight, preferably 0.01 to 7 % by weight, more preferably 0.1 to 5 % by weight. If the amount is less than 0.001 % by weight, an ultra-high molecular weight branched structure cannot be obtained, and if the amount is more than 10 % by weight, processability and compatibility with a polycarbonate resin may decrease.

The branched (meth)acrylic copolymer resin (B) may be prepared by conventional methods such as bulk polymerization, emulsion polymerization, and suspension polymerization.

The branched (meth)acrylic copolymer resin (B) may have a higher refractive index than conventional acrylic copolymers. Conventional polycarbonates have a refractive index of 1.590 and polymethylmethacrylates have a refractive index of 1.490. The branched (meth)acrylic copolymer resin of the present invention has a refractive index in between, that is, from 1.495 to 1.575. In some embodiments, the branched (meth)acrylic copolymer resin may have a refractive index of 1.50 to 1.575, or 1.51 to 1.575.

Furthermore, the branched (meth)acrylic copolymer may have a weight average molecular weight of 100,000 to 3,500,000. In an exemplary embodiment, the branched (meth)acrylic copolymer may have a weight average molecular weight of 500,000 to 3,000,000. In another exemplary embodiment, the branched (meth)acrylic copolymer may have a weight average molecular weight of 1,000,000 to 2,500,000.

The branched (meth)acrylic copolymer resin (B) may be used in an amount of more than 0 but not more than 80 % by weight, preferably 5 to 70 % by weight, more preferably 10 to 50 % by weight, most preferably 10 to 40 % by weight. When the branched (meth)acrylic copolymer resin (B) is used in an the amount of more than 80 % by weight, mechanical properties and moldability may be deteriorated.

### (C) Flame retardant

The flame retardant of the present invention may be a conventional flame retardant used in the art, and it may be without limitation at least one selected from phosphorus-containing flame retardants, halogen-containing flame retardants, and inorganic flame retardants.

In an exemplary embodiment, the flame retardant may be a phosphorus-containing flame retardant. Examples of the phosphorous-containing flame retardants may include phosphate, phosphonate, phosphinate, phosphine oxide, phosphazene, and a metal salt thereof.

A representative compound among phosphorus containing flame retardants may be a phosphate ester compound or phosphate and may be represented by the following Formula 3. 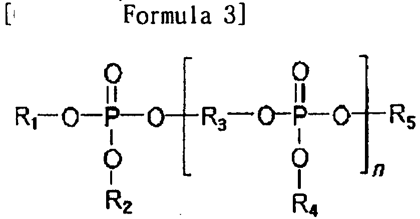 (wherein R₁, R₂, R₄, and R₅ are independently C₆~C₂₀ aryl group or C₁ ∼C₁₀ alkyl substituted aryl group; R₃ is a derivative of resorcinol, hydroquinol, bisphenol-A, and bisphenol-S; and n is 0~5. In some exemplary embodiments, n may be 1~5). The aromatic phosphate ester compound may be used alone or in combination with other phosphorus containing flame retardants in an amount of

1 to 50 parts by weight, preferably 5 to 40 parts by weight, more preferably 7 to 35 parts by weight per 100 parts by weight of a base resin.

In another exemplary embodiment, the flame retardant may be a halogen-containing flame retardant. Examples of the halogen-containing flame retardant may include, decabromo diphenylether, decabromo diphenylethane, tetrabromo bisphenol A, tetrabromo bisphenol A-epoxy oligomer, octabromo trimethylphenyl phosphate, ethylene bistetrabromophthalimide, tris (tribromophenol)triazine, and brominated polystyrene. These may be used alone or in combination with one another. In some exemplary embodiments, a halogen-containing compound which is able to melt at conventional process temperatures, for example, a halogen-containing compound having a melting point or a softening point under about 250 °C may be preferred. When the halogen-containing compound is used, inorganic compounds such as antimony trioxide and antimony pentoxide may be used depending on its use.

The halogen-containing compound may be used alone or in combination with other halogen-containing compounds or inorganic compounds in an amount of 1 to 50 parts by weight, preferably 10 to 40 parts by weight, per 100 parts by weight of a base resin.

### (D) (Meth)acrylic resin

The flame retardant thermoplastic resin composition optionally further comprises a (meth)acrylic resin (D). The (meth)acrylic resin may be a polymer or a copolymer of one or more of (meth)acrylic monomers, or mixtures thereof. In addition, the (meth)acrylic resin may have a linear structure.

Examples of the (meth)acrylic monomer may include methyl methacrylate, ethyl methacrylate, n-propyl methacrylate, n-butyl methacrylate, phenyl methacrylate, benzyl methacrylate, hexyl methacrylate, cyclohexyl methacrylate, phenoxy methacrylate, phenoxy ethyl methacrylate, methyl acrylate, ethyl acrylate, propyl acrylate, butyl acrylate, 2-ethylhexyl acrylate, and 2-ethylhexyl methacrylate. These (meth)acrylic monomers may be used alone or in combination with one another.

The (meth)acrylic resin (D) may be prepared by conventional methods such as bulk polymerization, emulsion polymerization, and suspension polymerization, and may be easily carried out by those skilled in the art.

Further, the (meth)acrylic resin (D) may be a homopolymer or a copolymer of (meth)acrylic monomers, or mixtures thereof.

The (meth)acrylic resin (D) may be used in an amount of less than 80 % by weight, preferably 5 to 70 % by weight, more preferably 10 to 50 % by weight, most preferably 10 to 40 % by weight. When the (meth)acrylic resin (D) is used in an the amount of more than 80 % by weight, good mechanical properties cannot be obtained.

Generally, when a polycarbonate resin is blended with a (meth)acrylic resin, the problems of low colorability and appearance occur in the ratio of 20~80 : 80~20 parts by weight due to their low compatibility, thus it is important to improve compatibility in the ratio range.

As such, copolymer particles having a branched structure (B) prevent phase separation between the polycarbonate resin (A) and the (meth)acrylate resin (D). Further, in the melting state, the phase separation may be minimized due to a decrease in viscosity so that compatibility between these heterogeneous resins may be improved.

In addition, when a mixture of the methacrylic copolymer with high refractive index (B) and the (meth)acrylic resin (D) is blended with the polycarbonate resin, the difference between the refractive index of the (meth)acrylic resin (D) and the refractive index of the polycarbonate may be lowered due to the increased refractive index of the methacrylic copolymer resin (B). Therefore, it is possible to improve compatibility and transparency by preventing the deterioration of transparency and colorability usually occurring in a conventional mixture of a (meth)acrylic resin and a polycarbonate resin due to the difference between the refractive index of the two resins. In addition, it is possible to prepare a resin composition having high transparency and colorability by improving scratch resistance in a conventional polycarbonate resin.

The flame retardant thermoplastic resin composition may have compatibility by lowering complex viscosity. In an exemplary embodiment, the thermoplastic resin composition may have a complex viscosity (η*) of 1,000 Pas to 10,000 Pas at 240 °C and 0.1 rad/s. In another exemplary embodiment, the thermoplastic resin composition may have a complex viscosity (η*) of 1,000 Pas to 5,000 Pas at 240 °C and 0.1 rad/s. In another embodiment, the complex viscosity may be 5,500 Pas to 10,000 Pas. Furthermore, at 240 °C, the ratio of η*(0.1 rad/s) / η*(100 rad/s) ranges from 3.0 to 100.0. When the complex viscosity is outsideranges out of theose above ranges, the compatibility may be deteriorated due to the phase separation. In an exemplary embodiment, the ratio of η*(0.1 rad/s) / η*(100 rad/s) ranges from 3.5 to 30.0. In another exemplary embodiment, the ratio of η*(0.1 rad/s) / η*(100 rad/s) ranges from 30.0 to 75.0. In another exemplary embodiment, the ratio of η*(0.1 rad/s) / η*(100 rad/s) ranges from 75.0 to 100.0.

The flame retardant thermoplastic resin composition may further comprise additives selected according to the needs. The additives may include flame retardant aids, antimicrobials, releasing agents, thermal stabilizers, antioxidants, light stabilizers, compatibilizer, pigments, inorganic fillers, surfactants, nucleating agents, coupling agents, fillers, plasticizers, impact modifiers, coloring agents, stabilizers, lubricants, antistatic agents, dyes, flameproof agents, and the like. These additives may be used alone or in combination with one another.

The present invention provides a molded article produced from the foregoing flame retardant thermoplastic resin composition. The molded article has a total light transmittance of 5 to 50 % measured by means of a Haze meter NDH 2000 manufactured by Nippon Denshoku Co. Ltd., a meltflow index of 10 to 80 g/10 min measured in accordance with ASTM D 1238, flame retardancy of V-0 measured in accordance with UL-94 at a thickness of 2.5 mm, and a scratch width of 240 to 320 µm measured by ball-type scratch profile test (BSP test).

The flame retardant thermoplastic resin composition of the present invention may be prepared by conventional methods. For example, the aforementioned components and other additives may be mixed in a mixer together and the mixture may be melt-extruded through a conventional extruder in a pellet form, and then the resin pellets may be used to prepare plastic molded articles by injection and extrusion.

Since the flame retardant thermoplastic resin composition has excellent scratch resistance, colorability, and transparency, the thermoplastic resin composition may be molded into various articles such as housings of electrical and electronic goods, parts of automobiles, lenses, and window glasses.

In some exemplary embodiments, the scratch-resistant thermoplastic resin composition may be used in housings of electrical and electronic products such as TVs, audio sets, washing machines, cassette players, MP3 players, telephones, game devices, video players, computers, and photocopiers.

In an exemplary embodiment, the scratch-resistant thermoplastic resin composition may be used for internal or external parts of automobiles such as dashboard panels, instrumental panels, door panels, quarter panels, and wheel covers.

The molding methods may be extrusion, injection, or casting molding, and may be easily carried out by those skilled in the art.

The invention may be better understood by reference to the following examples which are defined in the claims appended hereto.

### [Mode for Invention]

### Example

### (A) Polycarbonate resin

Bisphenol-A linear polycarbonate with a weight average molecular weight of 25,000 (Mw) manufactured by Teijin Chemicals Ltd. of Japan (product name: PANLITE L-1250 WP) was used.

### (B) Branched acrylic copolymer resin

### (B1) Branched acrylic copolymer resin-1

The branched copolymer resin was prepared by conventional suspension polymerizing 57 parts by weight of methylmethacrylate monomer, 40 parts by weight of phenoxy ethyl methacrylate having a refractive index of 1.57 and 3 parts by weight of divinyltetramethyldisiloxane. The resulting copolymer has a refractive index of 1.51 and a weight average molecular weight of 2,000,000 g/mol.

### (B2) Branched acrylic copolymer resin-2

The branched copolymer resin was prepared by conventional suspension polymerizing 27 parts by weight of methylmethacrylate monomer, 70 parts by weight of phenoxy ethyl methacrylate having a refractive index of 1.57 and 3 parts by weight of divinyltetramethyldisiloxane. The resulting copolymer has a refractive index of 1.53 and a weight average molecular weight of 2,000,000 g/mol.

### (B3) Branched acrylic copolymer resin-3

The branched copolymer resin was prepared by conventional suspension polymerizing 47 parts by weight of methylmethacrylate monomer, 50 parts by weight of phenoxy ethyl methacrylate and 3 parts by weight of divinyltetramethyldisiloxane. The resulting copolymer has a refractive index of 1.530 and a weight average molecular weight of 2,000,000 g/mol.

### (B4) Branched acrylic copolymer resin-4

The branched copolymer resin was prepared by conventional suspension polymerizing 17 parts by weight of methylmethacrylate monomer, 40 parts by weight of phenoxy ethyl methacrylate, 40 parts by weight of cyclohexyl methacrylate, and 3 parts by weight of divinyltetramethyldisiloxane. The resulting copolymer has a refractive index of 1.530 and a weight average molecular weight of 2,000,000 g/mol.

### (C) Flame retardant

Bisphenol A diphosphate manufactured by Daihachi Chemical Industry Co., Ltd. of Japan (product name: CR-741) was used.

### (D) (Meth)acrylic resin

Polymethylmethacrylate resin with a weight average molecular weight of 92,000 (Mw) manufactured by LG MMA Ltd. of South Korea (product name: L84) was used.

### Examples 1~6 and Comparative Examples 1~3

The components as shown in Table land a MBS-based impact modifier were added to a conventional mixer, and the mixture was extruded through a conventional twin screw extruder (L/D=29, Φ=45 mm) to prepare a product in pellet form. The pellets were dried at 80 °C for 6 hours and then molded into test specimens in a 6 0z injection molding machine.

The compatibility and the transparency were estimated by measuring flow mark, transparency, color and transmittance. The flow mark, transparency and color appeared on the test specimen were measured by naked eyes. The improved compatibility was confirmed by phase separation behavior through TEM images. The test specimen with dimensions of L 90 mm × W 50 mm × T 2.5 mm was used for measuring the above appearance properties.

The total light transmittance was measured by Haze meter NDH 2000 manufactured by Nippon Denshoku, and calculated by adding diffuse light transmittance (DF) and parallel transmittance (PT). It can be estimated that the higher total light transmittance is, the better transparency is.

The meltflow index of the test specimen was measured in accordance with ASTM D 1238 at 220 °C using a balance weight of 10 kg.

The scratch resistance was measured by ball-type scratch profile (BSP) test. The BSP was conducted by applying a scratch of a length of 10~20 mm onto resin specimens with dimensions of L 90 mm × W 50 mm × T 2.5 mm at load of 1,000 g and a scratch speed of 75 mm/min, using a metal spherical tip with a diameter of 0.7 mm and measuring a profile of the applied scratch through a surface profile analyzer (XP-I) manufactured by Ambios Corporation which provides a scratch profile through surface scanning using a metal stylus tip with a diameter of 2 µm. The scratch resistance was evaluated from a scratch width by the measured profile.

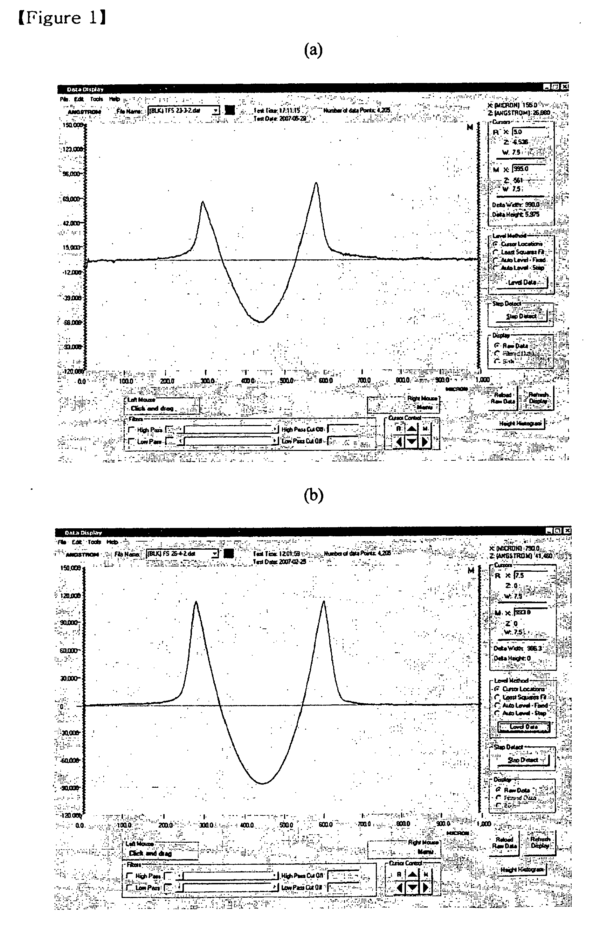

FIG. 1(a) was a scratch profile picture of a test specimen prepared in Example 2 measured by BSP test, and FIG. 1(b) was a scratch profile picture of a test specimen prepared in Comparative Example 3. The results of scratch width were shown in the following Table 1.

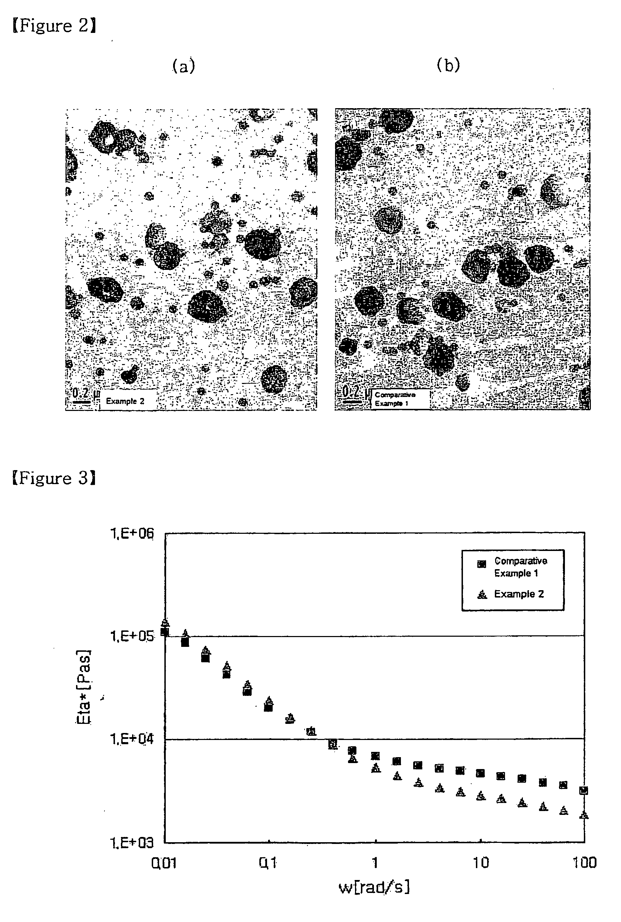

On the other hand, in order to analyze phase behavior, TEM images of resin compositions of Example 2 and Comparative Example 1 were respectively shown in FIGS. 2(a) and 2(b).

The viscosity behaviors of resin compositions of Example 2 and Comparative Example 1 were measured by ARES (Advanced Rheometric Expansion System) manufactured by Rheometric Scientific Corporation at 240 °C, and were shown in FIG. 3.

**[Table 1]**

| | | Examples | | | | | | Comparative Examples | | |
|---|---|---|---|---|---|---|---|---|---|---|
| | | 1 | 2 | 3 | 4 | 5 | 6 | 1 | 2 | 3 |
| (A) | | 70 | 70 | 70 | 70 | 70 | 60 | 70 | 60 | 100 |
| (B) | (B1) | 15 | - | - | - | - | - | - | - | - |
| | (B2) | - | 15 | 30 | - | - | 20 | - | - | - |
| | (B3) | - | - | - | 30 | - | - | - | - | - |
| | (B4) | - | - | - | - | 15 | - | - | - | - |
| (C)flame retardant | | 18 | 18 | 18 | 18 | 18 | 25 | 18 | 25 | 18 |
| (D) | | 15 | 15 | - | - | 15 | 20 | 30 | 40 | - |
| Flow Mark | | X | X | X | x | X | X | O | O | X |
| Transparency and color | | Translucent | Translucent | Translucent | Translucent | Translucent | Translu-cent | Opaque milky | Opaque milky | Translu-cent |
| Total light transmittance (TT) | | 13.28 | 25.82 | 27.01 | 31.20 | 18.05 | 19.96 | 9.89 | 5.11 | 39.81 |
| Meltflow Index (MI) | | 41.8 | 50.7 | 60.2 | 48.2 | 42.7 | 58.3 | 36.9 | 44.6 | 22.1 |
| Flame retardancy | | V0 | vo | vo | V0 | V0 | V0 | V0 | V0 | V0 |
| BSP | Width (µm) | 288 | 290 | 292 | 287 | 290 | 270.7 | 290 | 270 | 345 |

| | | | | | | | | | | |
|---|---|---|---|---|---|---|---|---|---|---|
| (*) : impossible to obtain the result of Meltflow index of Comparative Example 3 in the above conditions. | | | | | | | | | | |

As shown in Table 1, when the polycarbonate and the acrylic resin are blended, improved scratch resistance is exhibited, compared to using the polycarbonate only, which is also confirmed by the scratch profile (FIG. 1). The thermoplastic resins prepared from Examples 1∼6 exhibit a scratch width in a range of 240 to 320 µm measured by ball-type scratch profile test (BSP test) at a thickness of 0.5~5.0 mm.

With respect to flame retardancy, the flame retardant thermoplastic resin compositions of Examples 1~6 exhibit the level of flame retardancy of V0 or more measured in accordance with UL94.

Although Comparative Examples 1 and 2 in which branched (meth)acrylic copolymer resin was not added show better scratch resistance than Comparative Example 3 using only polycarbonate, they show flow mark and opaque appearance due to low compatibility between the resins. Examples 1~5 and Comparative Example 1 using similar amounts of polycarbonate exhibit similar level of scratch resistance, but whereas Examples 1~5 using branched (meth)acrylic copolymer resin exhibit improvement in terms of transparency and flow mark and high total light transmittance.

Further, when two similar branched acrylic copolymers are used, Examples 2 or 5 using the branched acrylic copolymer with high refractive index exhibits better transparency and compatibility and high total light transmittance, compared to Example 1. As a result of comparing Example 2 with Example 3, the resin compositions not using the acrylic resin exhibit better transparency and compatibility compared to the resin compositions in which the branched (meth)acrylic copolymer is mixed with the acrylic resin at the ratio 50 to 50.

The improved compatibility is caused by the control of refractive index and the minimization of phase separation, and the result of complex viscosity of the composition is confirmed through the results of ARES. As shown in FIG. 3, the complex viscosity measured by ARES shows a tendency to decrease, as the frequency (rad/s) increases from 0.1 to 100, and Example 2 exhibits a more significant decrease than Comparative Example 1.

The compatibility between polycarbonate and polymethylmethacrylate is confirmed in TEM image, and also shown in FIG. 2. Although Comparative Example 1 exhibits that the polymethylmethacrylate has a continuous phase and large domain in a polycarbonate base due to lowered compatibility, Example 2 exhibits improved compatibility since the phase size of polymethylmethacrylate decreases and spherical phase behavior is shown.

## Claims

1. A flame retardant thermoplastic resin composition comprising:
(A) 20 or more but less than 100 % by weight of a polycarbonate resin;
(B) more than 0 but not more than 80 % by weight of a branched (meth)acrylic copolymer resin; and
(C) 1 to 50 parts by weight of a flame retardant, per 100 parts by weight of a base resin comprising (A)+(B).

2. The flame retardant thermoplastic resin composition of Claim 1, wherein said branched (meth)acrylic copolymer resin (B) has a weight average molecular weight of 100,000 to 3,500,000.

3. The flame retardant thermoplastic resin composition of Claim 1, wherein said branched (meth)acrylic copolymer resin (B) has a refractive index of 1.495 to 1.575.

4. The flame retardant thermoplastic resin composition of Claim 1, wherein said branched (meth)acrylic copolymer resin (B) is a copolymer of (b1) an aromatic or aliphatic methacrylate represented by the following Formula 1 or Formula 2, (b2) a mono-functional unsaturated monomer. and (b3) a branch-inducing monomer, or a mixture of copolymers thereof: 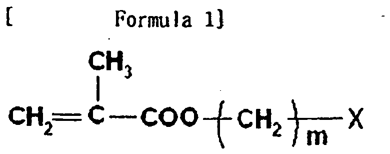 wherein m is an integer from 0 to 10, and X is selected from the group consisting of a cyclohexyl group, a phenyl group, a methylphenyl group, a methylethylphenyl group, a propylphenyl group, a methoxyphenyl group, a cyclohexylphenyl group, a chlorophenyl group, a bromophenyl group, a phenylphenyl group, and a benzylphenyl group; 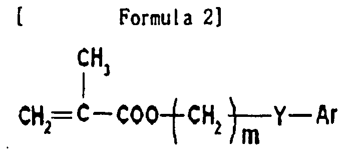 wherein m is an integer from 0 to 10, Y is oxygen(0) or sulfur(S), and Ar is selected from the group consisting of a cyclohexyl group, a phenyl group, a methylphenyl group, a methylethylphenyl group, a methoxyphenyl group, a cyclohexylphenyl group, a chlorophenyl group, a bromophenyl group, a phenylphenyl group, and a benzylphenyl group.

5. The flame retardant thermoplastic resin composition of Claim 4, wherein said branched (meth)acrylic copolymer resin (B) is a copolymer of 5 to 99.999 % by weight of the aromatic or aliphatic methacrylate (b1), 0 to 85 % by weight of the mono-functional unsaturated monomer (b2), and 0.001 to 10 % by weight of the branch-inducing monomer, or a mixture of copolymers thereof.

6. The flame retardant thermoplastic resin composition of Claim 4, wherein said aromatic or aliphatic methacrylate (b1) is selected from the group consisting of cyclohexyl methacrylate, phenoxy methacrylate, phenoxyethyl methacrylate, 2-ethylthiophenyl methacrylate, phenyl methacrylate, benzyl methacrylate, 2-phenylethyl methacrylate, 3-phenylpropyl methacrylate, 4-phenylbutyl methacrylate, 2-(2-methylphenyl)ethyl methacrylate, 2-(3-methylphenyl)ethyl methacrylate, 2-(4-methylphenyl)ethyl methacrylate, 2-(4-propylphenyl)ethyl methacrylate, 2-(4-(1-methylethyl)phenyl)ethyl methacrylate, 2-(4-methoxyphenyl)ethylmethacrylate, 2-(4-cyclohexylphenyl)ethyl methacrylate, 2-(2-chlorophenyl)ethyl methacrylate; 2-(3-chlorophenyl)ethyl methacrylate, 2-(4-chlorophenyl)ethyl methacrylate, 2-(4-bromophenyl)ethyl methacrylate, 2-(3-phenylphenyl)ethyl methacrylate, 2-(4-benzylphenyl)ethyl methacrylate, and mixtures thereof.

7. The flame retardant thermoplastic resin composition of Claim 4, wherein said mono-functional unsaturated monomer (b2) is selected from the group consisting of methacrylic acid ester monomers including methyl methacrylate, ethyl methacrylate, n-propyl methacrylate, n-butyl methacrylate, hexyl methacrylate, 2-ethylhexyl methacrylate: acrylic acid ester monomers including methyl acrylate, ethyl acrylate, propyl acrylate, butyl acrylate, hexyl acrylate, 2-ethyl hexyl acrylate: unsaturated carboxylic acid monomers including acrylic acid and methacrylic acid: acid anhydride monomers including maleic anhydride: hydroxyl group containing ester monomers including 2-hydroxyethyl acrylate, 2-hydroxypropyl acrylate, and monoglycerol acrylate; and mixtures thereof.

8. The flame retardant thermoplastic resin composition of Claim 4, wherein said branch-inducing monomer (b3) is at least one selected from the group consisting of silane or siloxane compounds including unsaturated hydrocarbon group-containing silicone-containing crosslinking monomers; aromatic crosslinking monomers including divinylbenzene; vinyl group-containing monomers including 1,4-divinyloxybutane and divinylsulfone; allyl compounds including diallyl phthalate, diallylacrylamide, triallyl (iso)cyanurate, and triallyl trimelitate; (poly)alkylene glycol di(meth)acrylate compounds including 1,6-hexanediol di(meth)acrylate, (poly)ethylene glycol di(meth)acrylate, (poly)propylene glycol di(meth)acrylate, (poly)tetramethylene glycol di(meth)acrylate, pentaerythritol tetra(meth)acrylate, pentaerythritol tri(meth)acrylate, pentaerythritol di(meth)acrylate, trimethylolpropane tri(meth)acrylate, dipentaerythritol hexa(meth)acrylate, dipentaerythritol penta(meth)acrylate, and glycerol tri(meth)acrylate; and mixtures thereof.

9. The flame retardant thermoplastic resin composition of Claim 1, wherein said thermoplastic resin composition further comprises (D) more than 0 but less than 80 % by weight of (meth)acrylic resin, wherein said (meth)acrylic resin has a linear structure.

10. The flame retardant thermoplastic resin composition of Claim 9, wherein said (meth)acrylic resin (D) is a polymer of (meth)acrylic monomer, a copolymer of (meth)acrylic monomers, or mixtures thereof.

11. The flame retardant thermoplastic resin composition of Claim 10, wherein said (meth)acrylic monomer is selected from the group consisting of methyl methacrylate, ethyl methacrylate, n-propyl methacrylate, n-butyl methacrylate, phenyl methacrylate, benzyl methacrylate, hexyl methacrylate, cyclohexyl methacrylate, phenoxy methacrylate, phenoxy ethyl methacrylate, methyl acrylate, ethyl acrylate, propyl acrylate, butyl acrylate, 2-ethylhexyl acrylate, 2-ethylhexylmethacrylate, and mixtures thereof.

12. The flame retardant thermoplastic resin composition of Claim 1, wherein said flame retardant (C) is selected from the group consisting of a phosphorus-containing flame retardant including a phosphate, a phosphonate, a phosphinates, a phosphine oxide, a phosphazene and a metal salt thereof; halogen-containing flame retardant including decabromo diphenylether, decabromo diphenylethane, tetrabromo bisphenol A, tetrabromo bisphenol A-epoxy oligomer, octabromo trimethylphenyl phosphate, ethylene bistetrabromophthalimide, tris (tribromophenol)triazine, brominated polystyrene; and a mixture thereof.

13. The flame retardant thermoplastic resin composition of any one of Claims 1 to 12, wherein said resin composition further comprising additives selected from the group consisting of flame retardant aids, antimicrobials, releasing agents, thermal stabilizers, antioxidants, light stabilizers, compatibilizers, dyes, inorganic fillers, surfactants, nucleating agents, coupling agents, fillers, plasticizers, impact modifiers, coloring agents, stabilizers, lubricants, antistatic agents, pigments, flameproof agents, and mixtures thereof.

14. The thermoplastic resin composition of Claim 13, wherein said flame retardant thermoplastic resin composition has a complex viscosity(η*) of 1,000 Pas to 10,000 Pas at 240 °C and 0.1 rad/s, and the ratio of η*(0.1 rad/s) / η*(100 rad/s) ranges from 3.0 to 100.0 at 240 °C.

15. A molded article molded from the resin composition as defined in any one of Claims 1~12, wherein said molded article has a total light transmittance of 5 to 50 % measured by means of a Haze meter NDH 2000 manufactured by Nippon Denshoku Co. Ltd., a meltflow index of 10 to 80 g/10 min measured in accordance with ASTM D 1238(220 °C, 10 kg), and a scratch width of 240 to 320 µm measured by ball-type scratch profile test (BSP test).

## Patentansprüche

1. Flammhemmende thermoplastische Harzzusammensetzung, umfassend:
(A) 20 oder mehr, aber weniger als 100 Gew.-% eines Polycarbonatharzes;
(B) mehr als 0, aber nicht mehr als 80 Gew.-% eines verzweigten (Meth)acrylcopolymerharzes; und
(C) 1 bis 50 Gewichtsteile eines Flammhemmers pro 100 Gewichtsteile eines (A) + (B) umfassenden Basisharzes.

2. Flammhemmende thermoplastische Harzzusammensetzung nach Anspruch 1, wobei das verzweigte (Meth)acrylcopolymerharz (B) ein Gewichtsmittel des Molekulargewichts von 100.000 bis 3.500.000 aufweist.

3. Flammhemmende thermoplastische Harzzusammensetzung nach Anspruch 1, wobei das verzweigte (Meth)acrylcopolymerharz (B) einen Brechungsindex von 1,495 bis 1,575 aufweist.

4. Flammhemmende thermoplastische Harzzusammensetzung nach Anspruch 1, wobei das verzweigte (Meth)acrylcopolymerharz (B) ein Copolymer von (b1) einem aromatischen oder aliphatischen Methacrylat der folgenden Formel 1 oder Formel 2, (b2) einem monofunktionellen ungesättigten Monomer und (b3) einem Verzweigung-einschließenden Monomer oder einem Gemisch von Copolymeren davon ist: 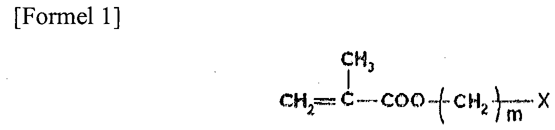 wobei m eine ganze Zahl von 0 bis 10 ist und X ausgewählt ist aus der Gruppe, bestehend aus einer Cyclohexylgruppe, einer Phenylgruppe, einer Methylphenylgruppe, einer Methylethylphenylgruppe, einer Propylphenylgruppe, einer Methoxyphenylgruppe, einer Cyclohexylphenylgruppe, einer Chlorphenylgruppe, einer Bromphenylgruppe, einer Phenylphenylgruppe und einer Benzylphenylgruppe; 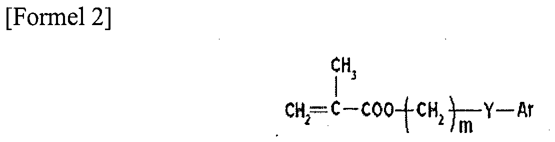 wobei m eine ganze Zahl von 0 bis 10 ist, Y Sauerstoff (O) oder Schwefel (S) ist und Ar ausgewählt ist aus der Gruppe, bestehend aus einer Cyclohexylgruppe, einer Phenylgruppe, einer Methylphenylgruppe, einer Methylethylphenylgruppe, einer Methoxyphenylgruppe, einer Cyclohexylphenylgruppe, einer Chlorphenylgruppe, einer Bromphenylgruppe, einer Phenylphenylgruppe und einer Benzylphenylgruppe.

5. Flammhemmende thermoplastische Harzzusammensetzung nach Anspruch 4, wobei das verzweigte (Meth)acrylcopolymerharz (B) ein Copolymer von 5 bis 99,999 Gew.-% des aromatischen oder aliphatischen Methacrylats (b1), 0 bis 85 Gew.-% des monofunktionellen ungesättigten Monomers (b2) und 0,001 bis 10 Gew.-% des Verzweigung-einschließenden Monomers oder eines Gemischs von Copolymeren davon ist.

6. Flammhemmende thermoplastische Harzzusammensetzung nach Anspruch 4, wobei das aromatische oder aliphatische Methacrylat (b1) ausgewählt ist aus der Gruppe, bestehend aus Cyclohexylmethacrylat, Phenoxymethacrylat, Phenoxyethylmethacrylat, 2-Ethylthiophenylmethacrylat, Phenylmethacrylat, Benzylmethacrylat, 2-Phenylethylmethacrylat, 3-Phenylpropylmethacrylat, 4-Phenylbutylmethacrylat, 2-(2-Methylphenyl)ethylmethacrylat, 2-(3-Methylphenyl)ethylmethacrylat, 2-(4-Methylphenyl)ethylmethacrylat, 2-(4-Propylphenyl)ethylmethacrylat, 2-(4-(1-Methylethyl)phenyl)ethylmethacrylat, 2-(4-Methoxyphenyl)ethylmethacrylat, 2-(4-Cyclohexylphenyl)ethylmethacrylat, 2-(2-Chlorphenyl)ethylmethacrylat, 2-(3-Chlorphenyl)ethylmethacrylat, 2-(4-Chlorphenyl)ethylmethacrylat, 2-(4-Bromphenyl)ethylmethacrylat, 2-(3-Phenylphenyl)ethylmethacrylat, 2-(4-Benzylphenyl)ethylmethacrylat und Gemischen davon.

7. Flammhemmende thermoplastische Harzzusammensetzung nach Anspruch 4, wobei das monofunktionelle ungesättigte Monomer (b2) ausgewählt ist aus der Gruppe, bestehend aus Methacrylsäureestermonomeren, einschließend Methylmethacrylat, Ethylmethacrylat, n-Propylmethacrylat, n-Butylmethacrylat, Hexylmethacrylat, 2-Ethylhexylmethacrylat; Acrylsäureestermonomeren, einschließend Methylacrylat, Ethylacrylat, Propylacrylat, Butylacrylat, Hexylacrylat, 2-Ethylhexylacrylat; ungesättigten Carbonsäuremonomeren, einschließend Acrylsäure und Methacrylsäure; Säureanhydridmonomeren, einschließend Maleinsäureanhydrid; hydroxygruppenhaltigen Estermonomeren, einschließend 2-Hydroxyethylacrylat, 2-Hydroxypropylacrylat und Monoglycerinacrylat; und Gemischen davon.

8. Flammhemmende thermoplastische Harzzusammensetzung nach Anspruch 4, wobei das Verzweigung-einschließende Monomer (b3) mindestens eines ist, das ausgewählt ist aus der Gruppe, bestehend aus Silan- oder Siloxanverbindungen, einschließend ungesättigte Kohlenwasserstoffgruppen enthaltenden, siliconhaltigen vernetzenden Monomeren; aromatischen vernetzenden Monomeren, einschließend Divinylbenzol; vinylgruppenhaltigen Monomeren, einschließend 1,4-Divinyloxybutan und Divinylsulfon; Allylverbindungen, einschließend Diallylphthalat, Diallylacrylamid, Triallyl(iso)cyanurat und Triallyltrimelitat; (Poly)alkylenglycoldi(meth)acrylatverbindungen, einschließend 1,6-Hexandioldi(meth)acrylat, (Poly)ethylen-glycoldi(meth)acrylat, (Poly)propylenglycoldi(meth)acrylat, (Poly)tetramethylen-glycoldi(meth)acrylat, Pentaerythritoltetra(meth)acrylat, Pentaerythritol-tri(meth)acrylat, Pentaerythritoldi(meth)acrylat, Trimethylolpropantri(meth)acrylat, Dipentaerythritolhexa(meth)acrylat, Dipentaerythritolpenta(meth)acrylat und Glycerintri(meth)acrylat; und Gemischen davon.

9. Flammhemmende thermoplastische Harzzusammensetzung nach Anspruch 1, wobei die thermoplastische Harzzusammensetzung des Weiteren (D) mehr als 0, aber weniger als 80 Gew.-% (Meth)acrylharz umfasst, wobei das (Meth)acrylharz eine lineare Struktur aufweist.

10. Flammhemmende thermoplastische Harzzusammensetzung nach Anspruch 9, wobei das (Meth)acrylharz (D) ein Polymer von (Meth)acrylmonomer, ein Copolymer von (Meth)acrylmonomeren oder Gemischen davon ist.

11. Flammhemmende thermoplastische Harzzusammensetzung nach Anspruch 10, wobei das (Meth)acrylmonomer ausgewählt ist aus der Gruppe, bestehend aus Methylmethacrylat, Ethylmethacrylat, n-Propylmethacrylat, n-Butylmethacrylat, Phenylmethacrylat, Benzylmethacrylat, Hexylmethacrylat, Cyclohexylmethacrylat, Phenoxymethacrylat, Phenoxyethylmethacrylat, Methylacrylat, Ethylacrylat, Propylacrylat, Butylacrylat, 2-Ethylhexylacrylat, 2-Ethylhexylmethacrylat und Gemischen davon.

12. Flammhemmende thermoplastische Harzzusammensetzung nach Anspruch 1, wobei der Flammhemmer (C) ausgewählt ist aus der Gruppe, bestehend aus einem phosphorhaltigen Flammhemmer, einschließend ein Phosphat, ein Phosphonat, ein Phosphinat, ein Phosphinoxid, ein Phosphazan und ein Metallsalz davon; einem halogenhaltigen Flammhemmer, einschließend Decabromdiphenylether, Decabromdiphenylethan, Tetrabrombisphenol A, Tetrabrombisphenol-A-epoxyoligomer, Octabromtrimethylphenylphosphat, Ethylenbistetrabromphthalimid, Tris(tribromphenol)triazin, bromiertes Polystyrol; und einem Gemisch davon.

13. Flammhemmende thermoplastische Harzzusammensetzung nach einem der Ansprüche 1 bis 12, wobei die Harzzusammensetzung des Weiteren Zusätze umfasst, die ausgewählt sind aus der Gruppe, bestehend aus flammhemmenden Hilfsstoffen, antimikrobiellen Mitteln, Trennmitteln, Wärmestabilisatoren, Antioxidationsmitteln, Lichtstabilisatoren, Verträglichmachem, Farbstoffen, anorganischen Füllstoffen, oberflächenaktiven Mitteln, Keimbildnern, Kupplungsmitteln, Füllstoffen, Weichmachern, Schlagmodifikatoren, Farbmitteln, Stabilisatoren, Schmiermitteln, antistatischen Mitteln, Pigmenten, flammfesten Mitteln und Gemischen davon.

14. Thermoplastische Harzzusammensetzung nach Anspruch 13, wobei die flammhemmende thermoplastische Harzzusammensetzung eine Komplexviskosität (η*) von 1.000 Pas bis 10.000 Pas bei 240°C und 0,1 rad/s aufweist und das Verhältnis von η*(0,1 rad/s) / η*(100 rad/s) im Bereich von 3,0 bis 100,0 bei 240°C liegt.

15. Formgegenstand, der aus der wie in einem der Ansprüche 1-12 definierten Harzzusammensetzung geformt ist, wobei der Formgegenstand eine Gesamtlichtdurchlässigkeit von 5 bis 50%, gemessen mithilfe eines Trübungsmessers NDH 2000, hergestellt von Nippon Denshoku Co. Ltd., einen gemäß ASTM D 1238 (220°C, 10 kg) gemessenen Schmelzflussindex von 80 g/10 Min. und eine durch den Kratzprofiltest vom Kugeltyp (ball-type scratch profile test; BSP-Test) gemessene Kratzbreite von 240 bis 320 µm aufweist.

## Revendications

1. Composition de résine thermoplastique ignifugée, comprenant :
A) 20 % en poids ou plus, mais moins de 100 % en poids, d'une résine de polycarbonate,
B) plus de 0 % en poids, mais au plus 80 % en poids, d'une résine de copolymère poly(méth)acrylique ramifié,
C) et 1 à 50 parties en poids d'un agent ignifugeant, pour 100 parties en poids de résine de base comprenant les composants (A) et (B).

2. Composition de résine thermoplastique ignifugée, conforme à la revendication 1, dans laquelle ladite résine de copolymère poly-(méth)acrylique ramifié (B) présente une masse molaire moyenne en poids de 100 000 à 3 500 000.

3. Composition de résine thermoplastique ignifugée, conforme à la revendication 1, dans laquelle ladite résine de copolymère poly-(méth)acrylique ramifié (B) présente un indice de réfraction de 1,495 à 1,575.

4. Composition de résine thermoplastique ignifugée, conforme à la revendication 1, dans laquelle ladite résine de copolymère poly-(méth)acrylique ramifié (B) est un copolymère
b1) d'un méthacrylate aliphatique ou aromatique représenté par la formule 1 ou la formule 2, donnée ci-dessous,
b2) d'un monomère insaturé monofonctionnel,
b3) et d'un monomère inducteur de ramification, ou un mélange de copolymères de tels monomères ; 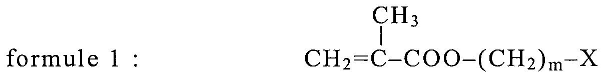 dans laquelle l'indice m est un nombre entier valant de 0 à 10, et X représente un groupe choisi dans l'ensemble formé par les suivants : cyclohexyle, phényle, méthyl-phényle, méthyl-éthyl-phényle, propyl-phényle, méthoxy-phényle, cyclohexyl-phényle, chloro-phényle, bromo-phényle, phényl-phényle et benzyl-phényle ; 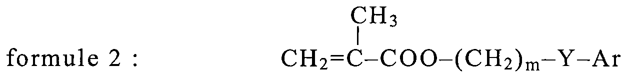 dans laquelle l'indice m est un nombre entier valant de 0 à 10, Y représente un atome d'oxygène (O) ou de soufre (S), et Ar représente un groupe choisi dans l'ensemble formé par les suivants : cyclohexyle, phényle, méthyl-phényle, méthyl-éthyl-phényle, méthoxy-phényle, cyclohexyl-phényle, chloro-phényle, bromo-phényle, phényl-phényle et benzyl-phényle.

5. Composition de résine thermoplastique ignifugée, conforme à la revendication 4, dans laquelle ladite résine de copolymère poly-(méth)acrylique ramifié (B) est un copolymère de 5 à 99,999 % en poids du méthacrylate aliphatique ou aromatique (b1), de 0 à 85 % en poids du monomère insaturé monofonctionnel (b2), et de 0,001 à 10 % en poids du monomère inducteur de ramification, ou un mélange de copolymères de tels monomères.

6. Composition de résine thermoplastique ignifugée, conforme à la revendication 4, pour laquelle ledit méthacrylate aliphatique ou aromatique (b1) est choisi dans l'ensemble constitué par les suivants : méthacrylate de cyclohexyle, perméthacrylate de phényle, méthacrylate de phénoxy-éthyle, méthacrylate de 2-phénylthio-éthyle, méthacrylate de phényle, méthacrylate de benzyle, méthacrylate de 2-phényl-éthyle, méthacrylate de 3-phényl-propyle, méthacrylate de 4-phényl-butyle, méthacrylate de 2-(2-méthyl-phényl)-éthyle, méthacrylate de 2-(3-méthyl-phényl)-éthyle, méthacrylate de 2-(4-méthyl-phényl)-éthyle, méthacrylate de 2-(4-propyl-phényl)-éthyle, méthacrylate de 2-[4-(1-méthyl-éthyl)-phényl)-éthyle, méthacrylate de 2-(4-méthoxy-phényl)-éthyle, méthacrylate de 2-(4-cyclohexyl-phényl)-éthyle, méthacrylate de 2-(2-chloro-phényl)-éthyle, méthacrylate de 2-(3-chloro-phényl)-éthyle, méthacrylate de 2-(4-chloro-phényl)-éthyle, méthacrylate de 2-(4-bromo-phényl)-éthyle, méthacrylate de 2-(3-phényl-phényl)-éthyle et méthacrylate de 2-(4-benzyl-phényl)-éthyle, ainsi que leurs mélanges.

7. Composition de résine thermoplastique ignifugée, conforme à la revendication 4, pour laquelle ledit monomère insaturé monofonctionnel (b2) est choisi dans l'ensemble constitué par les monomères de type ester d'acide méthacrylique, y compris les méthacrylate de méthyle, méthacrylate d'éthyle, méthacrylate de n-propyle, méthacrylate de n-butyle, méthacrylate d'hexyle et méthacrylate de 2-éthyl-hexyle, les monomères de type ester d'acide acrylique, y compris les acrylate de méthyle, acrylate d'éthyle, acrylate de propyle, acrylate de butyle, acrylate d'hexyle et acrylate de 2-éthyl-hexyle, les monomères de type acide carboxylique insaturé, y compris l'acide acrylique et l'acide méthacrylique, les monomères de type anhydride d'acide, y compris l'anhydride maléique, et les monomères de type ester comportant un groupe hydroxyle, y compris l'acrylate de 2-hydroxy-éthyle, l'acrylate de 2-hydroxy-propyle et le mono-acrylate de glycérol, ainsi que les mélanges de tels monomères.

8. Composition de résine thermoplastique ignifugée, conforme à la revendication 4, pour laquelle ledit monomère inducteur de ramification (b3) est choisi, au nombre d'au moins un, dans l'ensemble formé par les composés de type silane ou siloxane, y compris les monomères réticulants comportant des motifs de silicone comprenant des groupes hydrocarbonés insaturés, les monomères réticulants aromatiques, y compris le divinyl-benzène, les monomères vinyliques, y compris le 1,4-divinyloxy-butane et la divinyl-sulfone, les composés allyliques, y compris le phtalate de diallyle, le diallyl-acrylamide, les cya-nurate et isocyanurate de triallyle et le trimellitate de triallyle, les composés de type diacrylate ou diméthacrylate d'alkylèneglycol ou de polyalkylèneglycol, y compris les di(méth)acrylate de 1,6-hexanediol, di(méth)acrylate de (poly)éthylèneglycol, di(méth)acrylate de (poly)-propylèneglycol et di(méth)acrylate de (poly)tétraméthylèneglycol, et les tétra(méth)acrylate de pentaérythritol, tri(méth)acrylate de pentaérythritol, di(méth)acrylate de pentaérythritol, tri(méth)acrylate de tris-(hydroxy-méthyl)-propane, hexa(méth)acrylate de di-pentaérythritol, penta(méth)acrylate de di-pentaérythritol et tri(méth)acrylate de glycérol, ainsi que leurs mélanges.

9. Composition de résine thermoplastique ignifugée, conforme à la revendication 1, laquelle composition de résine thermoplastique comprend en outre
D) plus de 0 % en poids, mais moins de 80 % en poids, d'une résine polyacrylique ou polyméthacrylique, laquelle résine polyacrylique ou polyméthacrylique présente une structure linéaire.

10. Composition de résine thermoplastique ignifugée, conforme à la revendication 9, dans laquelle ladite résine polyacrylique ou polyméthacrylique (D) est un polymère d'un monomère acrylique ou méthacrylique, un copolymère de monomères acryliques et/ou méthacryliques, ou un mélange de tels polymères et/ou copolymères.

11. Composition de résine thermoplastique ignifugée, conforme à la revendication 10, dans laquelle ledit monomère acrylique ou méthacrylique est choisi dans l'ensemble constitué par les suivants : méthacrylate de méthyle, méthacrylate d'éthyle, méthacrylate de n-propyle, méthacrylate de n-butyle, méthacrylate de phényle, méthacrylate de benzyle, méthacrylate d'hexyle, méthacrylate de cyclohexyle, perméthacrylate de phényle, méthacrylate de phénoxy-éthyle, acrylate de méthyle, acrylate d'éthyle, acrylate de propyle, acrylate de butyle, acrylate de 2-éthyl-hexyle et méthacrylate de 2-éthyl-hexyle, ainsi que les mélanges de ces monomères.

12. Composition de résine thermoplastique ignifugée, conforme à la revendication 1, pour laquelle l'agent ignifugeant (C) est choisi dans l'ensemble formé par les agents ignifugeants phosphorés, y compris les phosphates, phosphonates, phosphinates, oxydes de phosphine et phosphazènes, ainsi que leurs sels de métaux, et les agents ignifugeants halogénés, y compris le décabromo-diphényl-éther, le décabromo-diphényl-éthane, le tétrabromo-bisphénol A, les oligomères époxy à base de tétrabromo-bisphénol A, le phosphate d'octabromo-triméthyl-phényle, l'éthylène-bis(tétrabromo-phtalimide), la tris(tri-bromo-phényl)-triazine et le polystyrène bromé, ainsi que les mélanges de tels agents.

13. Composition de résine thermoplastique ignifugée, conforme à l'une des revendications 1 à 12, laquelle composition de résine comprend en outre des adjuvants choisis dans l'ensemble formé par les suivants : auxiliaires pour ignifugeants, agents anti-microbiens, agents de démoulage, agents thermo-stabilisants, anti-oxydants, agents photo-stabilisants, agents de compatibilisation, colorants, charges inorganiques, tensioactifs, agents de nucléation, agents de couplage, charges, plastifiants, agents de modification de la résistance aux chocs, agents de coloration, stabilisants, lubrifiants, agents antistatiques, pigments, et agents d'ignifugation, ainsi que les mélanges de tels adjuvants.

14. Composition de résine thermoplastique conforme à la revendication 13, laquelle composition de résine thermoplastique ignifugée présente une viscosité complexe η* de 1 000 à 10 000 Pa.s à 240 °C pour 0,1 rad/s, et un rapport η*(0,1 rad/s)/η*(100 rad/s) valant de 3,0 à 100,0 à 240 °C.

15. Article obtenu par moulage d'une composition de résine conforme à l'une des revendications 1 à 12, lequel article moulé présente une photo-transmittance totale, mesurée à l'aide d'un appareil de mesure de voile Hazemeter NDH 2000 fabriqué par Nippon Denshoku Co., Ltd., de 5 à 50 %, un indice de fluidité à chaud, mesuré selon la norme ASTM D 1238 à 220 °C et sous 10 kg, de 10 à 80 g/10 min, et une largeur de rayure, mesurée dans un test de rayage de profil par bille (test PRB), de 240 à 320 µm.
